# FASCICULE DE BREVET EUROPEEN

(11) **EP 1 370 097 B1**
(45) Date de publication et mention de la délivrance du brevet: **13.11.2019**
(21) Numéro de dépôt: 03291177.8
(22) Date de dépôt: 20.05.2003
(51) Int. Cl.: H04W 88/08

(54) **Procédé de synchronisation de stations de base interconnectées via un réseau local**
Synchronisation von durch ein lokales Netzwerk verbundenen Basisstationen
Synchronisation of base stations interconnected via a local network

(30) Priorité: 06.06.2002 FR 0206962
(43) Date de publication de la demande: 10.12.2003
(73) Titulaire: Provenance Asset Group LLC, Essex, CT 06426 (US)
(72) Inventeur: Pinault, Francis, 92270 Bois-Colombes (FR)
(74) Mandataire: Potdevin, Emmanuel Eric

(56) Documents cités:
- EP-A- 0 903 873
- WO-A-01/78246
- WO-A-02/065707
- US-A- 5 448 570
- US-A- 5 519 759

## Description

La présente invention concerne un système de télécommunications comprenant des stations de base, par exemple de type DECT (Digital European Cordless Telecommunications en anglais), gérant des picocellules et interconnectées par un réseau local, notamment un réseau local de type IP (Internet Protocol en anglais).

De manière connue, un réseau local utilisant le protocole de transmission IP ne permet pas la synchronisation entre les stations de base de type DECT et donc d'assurer le « handover » c'est-à-dire la continuité de la transmission de la communication lorsqu'un terminal mobile, tel qu'un téléphone portable DECT, se déplace d'une cellule à une autre.

Le document WO-01-78246 décrit un système de télécommunications comprenant une pluralité de stations de base utilisant la technologie dite « BLUETOOTH » pour des communications radio de courte portée, ces stations de base couvrant chacune une picocellule et étant interconnectées via un réseau local.

Ce document divulgue un procédé de synchronisation de ces stations de base comportant les étapes suivantes :
- une étape de synchronisation grossière de chaque station de base voisine d'une station de base active c'est-à-dire dialoguant avec un terminal mobile, un signal de synchronisation grossière étant envoyé par la station de base active via le réseau local aux stations de base voisines,
- une étape d'émission d'une horloge de référence, la base active émettant périodiquement l'horloge de référence à un haut niveau de puissance dans le contexte de saut de fréquence relatif à cette technologie 'BLUETOOTH',
- une étape de synchronisation fine d'une station de base voisine, réalisée au moment de la détection du mobile dans la zone d'intersection entre la picocellule active et la picocellule voisine, par l'écoute soit de la base active, soit du mobile en déplacement.

La synchronisation des stations de base est réalisée en leurrant un terminal mobile qui se déplace en lui faisant croire qu'il reste dans la même picocellule. Ainsi, il conserve et la synchronisation et les fréquences utilisées de la station de base active d'origine avec la loi de saut de fréquence associée.

Ce procédé de synchronisation est complexe et doit être réalisé « en dynamique » c'est-à-dire dès qu'un handover intervient.

En outre, pour la mise en œuvre de cette synchronisation, cela nécessite de disposer d'un ensemble de moyens radio supplémentaires disponibles dans chaque station de base et propre à être configurés quand un terminal mobile se déplace. Ces moyens disponibles pour accueillir le terminal mobile en déplacement ne peuvent être utilisés pour d'autres tâches. La conséquence est le prix des configurations à mettre en oeuvre. En particulier, ce type de technique n'est pas adapté en cas de trafic important.

Or les utilisateurs d'un système de transmission par exemple professionnel, ont à cœur de rentabiliser leurs infrastructures.

Le document US 5.519.759 décrit un procédé de synchronisation d'une pluralité de stations de base dans un système de télécommunications sans fil de type DECT comprenant des stations de base couvrant chacune une picocellule, et interconnectées par un réseau local comprenant une pluralité d'autocommutateurs. Ce procédé comporte une phase d'initialisation du système incluant une étape de hiérarchisation des stations de base, réalisée au sein de chaque groupe de stations de base couvrant des picocellules voisines entre elles. Cette étape de hiérarchisation consiste à : diffuser un signal de synchronisation à partir d'une première station de base du groupe considéré ; à recevoir ce signal et mesurer sa puissance dans les autres stations du groupe qui sont capables de le recevoir ; puis transmettre à un serveur central les résultats de ces mesures de puissance ; comparer ces résultats pour déterminer la station qui a reçu avec la meilleure puissance ; puis donner l'ordre à cette station voisine de se synchroniser sur la première station puis d'émettre à son tour un signal de synchronisation ; et réitérer ce processus jusqu'à ce que toutes les stations constituant un groupe aient été successivement synchronisées.

La présente invention a pour objet de fournir un procédé plus simple, et peu onéreux à mettre en oeuvre, destiné à la synchronisation des stations de base, notamment de type DECT, interconnectées via un réseau local notamment de type IP.

A cet effet, la présente invention propose un procédé selon la revendication 1.

Le procédé selon l'invention, basé sur une synchronisation des stations de bases lors de l'initialisation du réseau, s'appuie sur la caractéristique de la modulation de type AMRT (accès multiple à répartition dans le temps) classiquement utilisée dans les communications DECT et permettant sur une même fréquence d'avoir plusieurs communications simultanées établies.

L'invention concerne aussi un système selon la revendication 3.

Le système selon l'invention présente l'avantage d'être une solution transparente pour les terminaux mobiles, ne nécessitant pas l'ajout d'équipements coûteux au sein de chaque station de base. Les émetteurs radios et les récepteurs radios déjà existants dans chaque station de base sont utilisés les uns pour émettre l'horloge de référence ou l'horloge fine, les autres pour écouter l'une des stations de base de numéro inférieur respectivement.

De préférence, le système peut comprendre des moyens de gestion en dynamique de la phase d'initialisation du système, liés à des moyens répertoriant la topologie du système et notamment la répartition de l'ensemble des picocellules.

Chaque station de base comprend des moyens de réception des messages de type IP tels que le signal de synchronisation grossière sous forme de paquets de données.

Avantageusement, chaque station de base peut comprendre des moyens de cadencement de paquets de voix et/ou données de type IP avant leur transmission radio de type AMRT aux terminaux mobiles du système. Ces moyens permettent de supprimer l'effet 'jittering' généré par la transmission via le local c'est-à-dire l'incertitude dans le temps de l'arrivée des paquets de données au niveau des stations de bases.

Bien entendu, la description qui précède a été donnée à titre purement illustratif. On pourra sans sortir du cadre de l'invention remplacer tout moyen par un moyen équivalent.

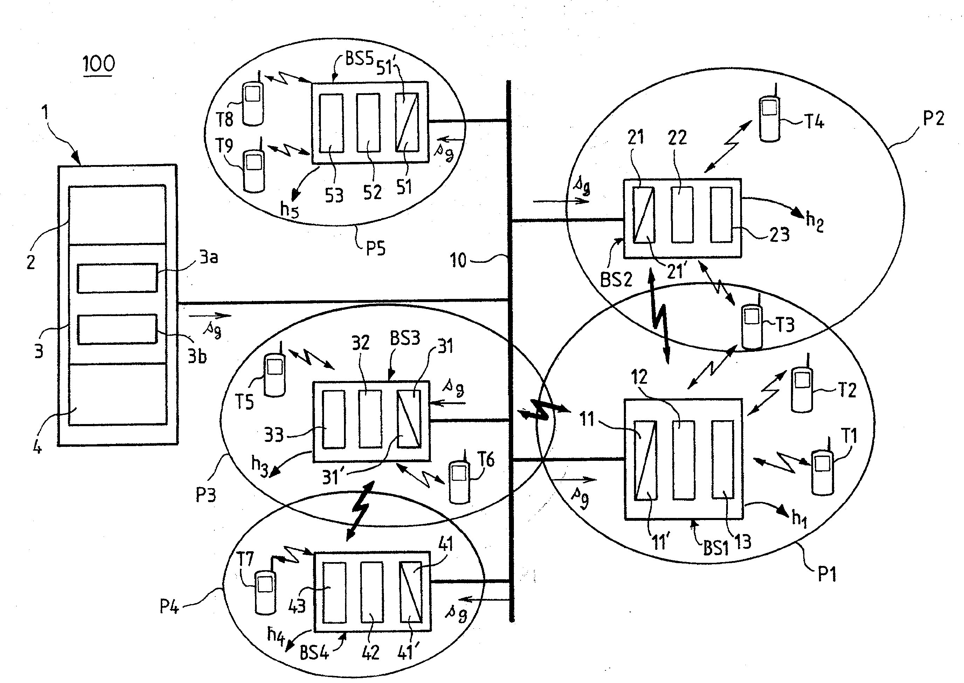

Les caractéristiques et objets de la présente invention ressortiront de la description détaillée donnée ci-après en regard de la figure annexée, présentée à titre illustratif et nullement limitatif.

La figure unique est une représentation schématique d'un système de transmission selon l'invention 100 comprenant cinq stations de base DECT BS1 à BS5 couvrant respectivement une picocellule P1 à P5 et interconnectées via un réseau local 10 d'architecture IP.

Dans ce mode de réalisation préféré de l'invention, quatre des stations de bases BS1 à BS4 présentent des picocellules reliées entre elles, chaque picocellule d'une station de base se chevauchant avec au moins une autre picocellule d'une station de base dite voisine. Des terminaux mobiles DECT, tels que des téléphones portables T1 à T7 appartenant au système 100 sont susceptibles de se déplacer dans les picocellules couvertes P1 à P4 par ce groupe de stations de base. Aussi, l'invention permet d'assurer tout handover dès que le système 100 est initialisé.

Inversement, la cinquième station de base BS5 couvre une picocellule isolée P5 qui va fonctionner indépendamment des autres.

Le système 100 comprend un serveur de synchronisation 1 incluant :
- des moyens 2 répertoriant la topologie du système 100,
- un module de synchronisation grossière 3 comportant :
- des moyens 3a de génération de messages IP à transmettre par le réseau local aux stations de bases notamment,
- des moyens 3b pour une hiérarchisation des stations de bases groupées BS1 à BS4,
- des moyens 4 de gestion en dynamique de la phase d'initialisation du système 100.

La hiérarchisation se définit par l'attribution dans un ordre croissant d'un numéro entier positif n°1, n°2, n°3, n°4 respectivement pour les stations de bases BS1, BS2, BS3, BS4, cette attribution étant fixée en fonction de l'ordonnancement des picocellules P1 à P4 communiqué par les moyens 2. La hiérarchisation est conçue de façon à ce que chaque station de base BS1 à BS4 groupées puisse avoir une station de base voisine de numéro inférieur. A titre illustratif, trois autres arrangements possibles des numéros, en gardant la même station BS1 prioritaire, sont répertoriés dans le tableau 1 suivant.

**Tableau 1**

| | Station de base BS1 | Station de base BS2 | Station de base BS3 | Station de base BS4 |
|---|---|---|---|---|
| Configuration 1 | n°1 | n°2 | n°4 | n°3 |
| Configuration 2 | n°1 | n°3 | n°2 | n°4 |
| Configuration 3 | n°1 | n°3 | n°4 | n°2 |

Le système 100 est réinitialisé dès que nécessaire (réorganisation ou extension du système, panne d'une station de base prioritaire etc...) de sorte qu'une base esclave ou isolée peut devenir maître et/ou la répartition des picocellules se transformer. Aussi, il est préférable que chaque station de base soit équipée des mêmes moyens.

Chaque station de base BS1 à BS5 comprend donc:
- des moyens de réception 11 à 51 des messages IP transmis via le réseau local par paquets de voix et/ou données, et couplés à des moyens 11' à 51' de cadencement de ces paquets à transmettre par radio,
- des moyens d'émission 12 à 52 de signaux radio numériques en mode AMRT (accès multiple à répartition dans le temps),
- des moyens de réception 13 à 53 de signaux radio modulés, utilisés, pour les stations de base groupées BS1 à BS4, pour l'écoute d'une des stations de base de numéro inférieur.

Les stations de bases BS2, BS3 respectivement n°2 et n°3 peuvent écouter la station de base prioritaire BS1 indépendamment. Aussi la station de base BS3, de numéro supérieur, peut être synchronisée avant la station de base BS2.

Les moyens 4 gèrent en dynamique la phase d'initialisation du système 100, en enregistrant au fur et à mesure les stations de bases et les terminaux synchronisés, en manageant l'attente des stations de bases non encore synchronisées, en mettant à jour les moyens 3 et notamment les tables de localisation.

Pour l'initialisation du système 100, les moyens 2 établissent la forme et la dimension optimales de chaque picocellule ainsi que la répartition des picocellules à choisir pour rendre possible au maximum l'écoute entre stations de base voisines. Ensuite, les moyens 2 répertorient le maillage des picocellules du système 100 et construisent des tables de localisation des terminaux T1 à T7 à synchroniser. Ces informations sur la topologie du système 100 sont accessibles aux moyens 3 et 4.

Décrivons le déroulement d'une phase d'initialisation du système 100. La synchronisation fine des stations de base non prioritaires est symbolisée par des flèches noires doubles en trait épais et celle des terminaux mobiles par des flèches noires doubles en trait fin.

Tout d'abord, chaque station de base BS1 à BS5 reçoit un signal de synchronisation grossière s_{g} émis sous forme d'un message IP par les moyens 3a et diffusé via le réseau local 10.

La station de base BS1, après dialogue avec les moyens pour la hiérarchisation 3b, s'identifie comme base prioritaire donc n°1 et décide elle même d'émettre, via les moyens d'émission 12, une horloge de référence h₁ sous forme d'un signal radio AMRT contenant l'information temporelle de synchronisation. Les terminaux T1, T2, T3 alors placés dans la picocellule P1 de la base prioritaire BS1 se synchronisent également.

Parallèlement ou consécutivement à la station de base prioritaire BS1, la station de base BS2 après dialogue avec les moyens pour la hiérarchisation 3b s'identifie comme base non prioritaire n°2. Aussi, par l'intermédiaire de ses moyens 23 et grâce aux informations contenues dans le signal s_{g}, cette dernière ouvre une fenêtre de réception suffisamment grande pour chercher et capter l'horloge de référence h₁ pour sa synchronisation fine. Les moyens d'émission 32 émettent ensuite une horloge fine h₂ contenant ladite information temporelle : le terminal T4 dans sa picocellule P2 se synchronise.

Dans une variante, la station de base BS2 peut aussi se synchroniser par l'écoute d'un message de signalisation mettant en jeu la station de base prioritaire BS1 et le terminal mobile T3 dans la zone d'intersection des picocellules P1 et P2, l'information temporelle étant dans ce cas contenue dans la trame de signalisation. De fait, la station de base BS2 est alors synchronisée indirectement sur la base prioritaire BS1.

Parallèlement ou consécutivement aux autres stations de base, la station BS3 s'identifie comme base non prioritaire numéro n°3. La station de base BS3 se met en attente de synchronisation fine par l'écoute de la base prioritaire BS1. Après réception de l'horloge de référence pour sa synchronisation, la station de base BS3 émet une horloge fine h₃ contenant ladite information temporelle : les terminaux T5, T6 dans sa picocellule P3 sont synchronisés.

Enfin, de façon analogue, la station BS4 s'identifie comme base non prioritaire n°4. Aussi, elle capte l'horloge fine h₃ émise par la station de base voisine BS2 et de numéro inférieur pour sa synchronisation et émet une horloge fine h₄ permettant au terminal T7 dans sa picocellule P4 de se synchroniser.

Par ailleurs, la cinquième station de base BS5 émet sa propre horloge de référence h₅ pour se synchroniser avec les terminaux T8, T9 de sa picocellule isolée P5.

Bien entendu, l'invention n'est pas limitée au mode de réalisation qui vient d'être décrit.

L'invention s'applique aussi à un ensemble de stations de bases interconnectées via IP et utilisant une modulation de type AMRT avec un autre protocole que pour le DECT.

Enfin, on pourra remplacer tout moyen par un moyen équivalent sans sortir du cadre de l'invention.

## Revendications

1. Procédé de synchronisation d'une pluralité de stations de base dans un système de télécommunications sans fil (100) comprenant des stations de base (BS1 à BS5) couvrant chacune une picocellule (P1 à P5), et interconnectées par un réseau local (10) ; ce procédé comportant :
- une phase d'initialisation du système incluant une étape de hiérarchisation des stations de base, réalisée au sein de chaque groupe de stations de base (BS1 à BS4) couvrant des picocellules (P1 à P4) voisines entre elles,
- et une étape de synchronisation au cours de laquelle une station de base se synchronise en écoutant une station qui est hiérarchiquement supérieure, et au cours de laquelle la station de base qui a été synchronisée se met à émettre une horloge permettant la synchronisation d'une autre station de base qui lui est hiérarchiquement inférieure ;
**caractérisé en ce que** la phase d'initialisation comprend en outre une étape d'initialisation du système (100) par l'émission d'un signal de synchronisation grossière (s_{g}) transporté par le réseau local (10) vers chaque station de base (BS1 à BS4),
et **en ce que** cette étape de hiérarchisation au sein d'un groupe de stations de base inclut l'attribution, selon un ordre croissant, d'un numéro de type nombre entier positif (n°1 à n°4) à chacune des cellules dans ce groupe de stations de base (BS1 à BS4) couvrant des picocellules (P1 à P4) voisines entre elles, en fonction de la répartition des picocellules (P1 à P4) définie par la topologie du système (100), de ces stations de base, de façon à ce que chaque station de base (BS1 à BS4) de ce groupe puisse avoir une station de base voisine de numéro inférieur.

2. Procédé selon la revendication 1, dans lequel la phase d'initialisation du système comporte en outre :
- une étape d'émission d'une horloge de référence (h₁) par la station n°1,
- et une étape de synchronisation fine des stations de base (BS1 à BS4) à partir de ladite horloge, successivement et dans l'ordre des numéros respectifs des stations de base constituant le groupe considéré.

3. Système de télécommunications (100) comprenant des stations de base (BS1 à BS5) couvrant chacune une picocellule (P1 à P5) et interconnectées par un réseau local (10), comprenant :
- un serveur de synchronisation (1) incluant des moyens pour réaliser une phase d'initialisation du système incluant une étape de hiérarchisation des stations de base, réalisée au sein de chaque groupe de stations de base (BS1 à BS4) couvrant des picocellules (P1 à P4) voisines entre elles ;
- et des stations de base (BS1 à BS5) comportant chacune des moyens pour se synchroniser en écoutant une station qui est hiérarchiquement supérieure, et lorsque cette station de base a été synchronisée, émettre une horloge permettant la synchronisation d'une autre station de base qui lui est hiérarchiquement inférieure ;
**caractérisé en ce que** ce serveur de synchronisation (1) comporte des moyens de génération et d'envoi d'un signal de synchronisation grossière (sg) destiné à l'ensemble des stations de base et transporté via ledit réseau local,
et des moyens (3b) pour attribuer, selon un ordre croissant, un numéro de type nombre entier positif (n°1 à n°4) à chacune des cellules dans un groupe de stations de base (BS1 à BS4) couvrant des picocellules (P1 à P4) voisines entre elles , en fonction de la répartition des picocellules (P1 à P4) définie par la topologie du système, de ces stations de base, de façon à ce que chaque station de base (BS1 à BS4) de ce groupe puisse avoir une station de base voisine de numéro inférieur.

4. Système de télécommunications (100) selon la revendication 3, dans lequel le serveur de synchronisation (1) est couplé à des moyens (2) répertoriant la topologie du système (100).

5. Système de télécommunications (100) selon la revendication 3, dans lequel chaque station de base (BS1 à BS5) comprend des moyens de cadencement de paquets de voix et/ou données de type IP (11' à 51').

6. Système de télécommunication selon la revendication 3, dans lequel chaque station de base (BS1 à BS5) comprend en outre:
- des moyens de réception (11 à 51) du signal de synchronisation grossier (sg),
- des moyens d'émission (12 à 52) de signaux d'horloge de référence de synchronisation fine, et
- des moyens de synchronisation (13 à 53) qui reçoivent les signaux d'horloge de référence de synchronisation fine.

7. Système de télécommunication selon la revendication 3) dans lequel ledit signal de synchronisation grossière (s_{g}) comprend des paquets de données ou de transmission de protocole Internet.

## Patentansprüche

1. Verfahren zum Synchronisieren mehrerer Basisstationen in einem Drahtloskommunikationssystem (100), umfassend Basisstationen (BS1 bis BS5), jeweils eine Picozelle (P1 bis P5) abdeckend und über ein lokales Netzwerk (10) miteinander verbunden, wobei dieses Verfahren Folgendes umfasst:
- eine Systeminitialisierungsphase einschließlich eines Schritts des Hierarchisierens der Basisstationen, ausgeführt innerhalb jeder Gruppe von Basisstationen (BS1 bis BS4) die aneinander angrenzende Picozellen (P1 bis P4) abdecken,
- und einen Synchronisierungsschritt, während dessen eine Basisstation, durch Abhören einer Station, die in der Hierarchie höher eingestuft ist, synchronisiert, und während dessen die Basisstation, die synchronisiert worden ist, beginnt, eine Uhrzeit zu übermitteln, die die Synchronisierung einer anderen Basisstation ermöglicht, die in der Hierarchie niedriger als diese eingestuft ist;
**dadurch gekennzeichnet, dass** die Initialisierungsphase ferner einen Schritt des Initialisierens des Systems (100) durch Übermitteln eines groben Synchronisierungssignals (Sg) umfasst, das über das lokale Netzwerk (10) an jede Basisstation (BS1 bis BS4) weitergeleitet wird,
und dadurch, dass dieser Hierarchisierungsschritt in einer Gruppe von Basisstationen die Zuordnung einer positiven Ganzzahl (1 bis 4) in aufsteigender Reihenfolge an jede Zelle in dieser Gruppe von Basisstationen (BS1 bis BS4), die aneinander angrenzende Picozellen (P1 bis P4) abdecken, entsprechend der durch die Topologie des Systems (100) definierten Verteilung von Picozellen (P1 bis P4) dieser Basisstationen enthält, so dass jede Basisstation (BS1 bis BS4) in dieser Gruppe eine angrenzende Basisstation mit einer kleineren Zahl aufweisen kann.

2. Verfahren nach Anspruch 1, wobei die Systeminitialisierungsphase ferner Folgendes umfasst:
- einen Schritt des Übermittelns einer Referenzuhrzeit (h₁) durch Station Nr. 1,
- und einen Schritt des feinen Synchronisierens der Basisstationen (BS1 bis BS4) unter Einsatz der Uhrzeit, nacheinander und in der Reihenfolge der jeweiligen Nummern der Basisstationen, die die entsprechende Gruppe ausbilden.

3. Telekommunikationssystem (100), umfassend Basisstationen (BS1 bis BS5), die jeweils eine Picozelle (P1 bis P5) abdecken und über ein lokales Netzwerk (10) miteinander verbunden sind, Folgendes umfassend:
- einen Synchronisationsserver (1) einschließlich Mittel zum Ausführen einer Systeminitialisierungsphase einschließlich eines Schritts des Hierarchisierens der Basisstationen, ausgeführt innerhalb jeder Gruppe von Basisstationen (BS1 bis BS4), die aneinander angrenzende Picozellen (P1 bis P4) abdecken;
- und Basisstationen (BS1 bis BS5), jeweils umfassend Mittel zum Synchronisieren durch Abhören einer Station, die in der Hierarchie höher eingestuft ist, und wenn diese Basisstation synchronisiert worden ist, Übermitteln einer Uhrzeit, die die Synchronisierung einer anderen Basisstation ermöglicht, die in der Hierarchie niedriger als diese eingestuft ist;
**dadurch gekennzeichnet, dass** dieser Synchronisationsserver (1) Folgendes umfasst:
Mittel zum Erzeugen und Übermitteln eines groben Synchronisationssignals (sg) an alle Basisstationen, über das lokale Netzwerk weitergeleitet, sowie Mittel (3b) zum Zuordnen einer positiven Ganzzahl (1 bis 4) in aufsteigender Reihenfolge an jede Zelle in einer Gruppe von Basisstationen (BS1 bis BS4), die aneinander angrenzende Picozellen (P1 bis P4) abdecken, entsprechend der durch die Topologie des Systems definierten Verteilung von Picozellen (P1 bis P4) dieser Basisstationen, so dass jede Basisstation (BS1 bis BS4) in dieser Gruppe eine angrenzende Basisstation mit einer kleineren Zahl aufweisen kann.

4. Telekommunikationssystem (100) nach Anspruch 3, wobei der Synchronisierungsserver (1) mit Mitteln (2) gekoppelt ist, die die Topologie des Systems (100) angeben.

5. Telekommunikationssystem (100) nach Anspruch 3, wobei jede Basisstation (BS1 bis BS5) Mittel zum zeitlichen Abstimmen von Sprach- und/oder Datenpaketen vom IP-Typ (11' bis 51') umfasst.

6. Telekommunikationssystem nach Anspruch 3, wobei jede Basisstation (BS1 bis BS5) ferner Folgendes umfasst:
- Mittel (11 bis 51) zum Empfangen des groben Synchronisierungssignals (sg),
- Mittel (12 bis 52) zum Übermitteln von feinen Referenzuhrzeit-Synchronisierungssignalen, und
- Synchronisierungsmittel (13 bis 53), die feine Referenzuhrzeit-Synchronisierungssignale empfangen.

7. Telekommunikationssystem nach Anspruch 3, wobei das grobe Synchronisierungssignal (sg) Daten- oder Internetprotokollübertragungspakete umfasst.

## Claims

1. Method for synchronising a plurality of base stations in a wireless telecommunications system (100) comprising base stations (BS1 to BS5) each covering a picocell (P1 to P5), and interconnected by a local network (10); this method comprising:
- a system initialisation phase including a step of hierarchising the base stations, conducted within each group of base stations (BS1 to BS4) covering picocells (P1 to P4) adjacent to each other,
- and a synchronisation step during which a base station synchronises by listening to a station which is hierarchically higher, and during which the base station which has been synchronised starts to transmit a clock enabling the synchronisation of another base station which is hierarchically lower than it;
**characterised in that** the initialisation phase further comprises a step of initialising the system (100) by transmitting a rough synchronisation signal (Sg) transported by the local network (10) to each base station (BS1 to BS4),
and **in that** this hierarchisation step within a group of base stations includes the allocation, in ascending order, of a number of positive integer type (1 to 4) to each cell in this group of base stations (BS1 to BS4) covering picocells (P1 to P4) adjacent to each other, according to the distribution of the picocells (P1 to P4) defined by the topology of the system (100), of these base stations, so that each base station (BS1 to BS4) in this group can have an adjacent base station of lower number.

2. Method according to claim 1, wherein the system initialisation phase further comprises:
- a step of transmitting a reference clock (h₁) by station no. 1,
- and a step of fine synchronisation of the base stations (BS1 to BS4) using said clock, successively and in the order of the respective numbers of the base stations forming the group considered.

3. Telecommunications system (100) comprising base stations (BS1 to BS5) each covering a picocell (P1 to P5) and interconnected by a local network (10), comprising:
- a synchronisation server (1) including means for performing a system initialisation phase including a step of hierarchising the base stations, performed within each group of base stations (BS1 to BS4) covering picocells (P1 to P4) adjacent to each other;
- and base stations (BS1 to BS5) each comprising means for synchronising by listening to a station which is hierarchically higher, and when this base station has been synchronised, transmitting a clock enabling the synchronisation of another base station which is hierarchically lower than it;
**characterised in that** this synchronisation server (1) comprises means for generating and transmitting a rough synchronisation signal (sg) to all the base stations and transported via said local network, and means (3b) for allocating, in ascending order, a number of positive integer type (1 to 4) to each cell in a group of base stations (BS1 à BS4) covering picocells (P1 to P4) adjacent to each other, according to the distribution of the picocells (P1 to P4) defined by the topology of the system, of these base stations, so that each base station (BS1 to BS4) in this group can have an adjacent base station of lower number.

4. Telecommunications system (100) according to claim 3, wherein the synchronisation server (1) is coupled to means (2) indicating the topology of the system (100).

5. Telecommunications system (100) according to claim 3, wherein each base station (BS1 to BS5) comprises means for timing voice and/or data packets of type IP (11' to 51').

6. Telecommunications system according to claim 3, wherein each base station (BS1 to BS5) further comprises:
- means (11 to 51) for receiving the rough synchronisation signal (sg),
- means (12 to 52) for transmitting fine synchronisation reference clock signals, and
- synchronisation means (13 to 53) which receive the fine synchronisation reference clock signals.

7. Telecommunications system according to claim 3, wherein said rough synchronisation signal (sg) comprises data or Internet protocol transmission packets.
